# EUROPÄISCHE PATENTANMELDUNG

(11) **EP 0 615 140 A2**
(43) Veröffentlichungstag der Anmeldung: **14.09.1994**
(21) Anmeldenummer: 94103031.4
(22) Anmeldetag: 01.03.1994
(51) Int. Cl.: G01V 3/06

(54) **Verfahren und Vorrichtung zum Orten einer Leitung**

(30) Priorität: 10.03.1993 DE 4307453
(71) Anmelder: RUHRGAS AKTIENGESELLSCHAFT, D-45138 Essen (DE)
(72) Erfinder: Wirkner-Bott, Isolde, Dr., D-60488 Frankfurt (DE); Hollenberg, Klaus, Dr., D-61352 Bad Homburg (DE); Hoppe, Manfred, Dr., D-46284 Dorsten (DE)

(57) **Zusammenfassung**

Der Leitung wird zum Aufbau eines elektromagnetischen Feldes ein elektrischer Wechselstrom (5a) eingeprägt. Ein Meßkopf (7) mit drei orthogonal zueinander ausgerichteten Spulen (7x, 7y, 7z) wird entlang einer Abtastbahn geführt, die quer zum generellen Leitungsverlauf liegt. Die Achse einer ersten Spule (7x) ist in eine zur Abtastbahn parallele erste Richtung (x) und diejenige einer zweiten Spule (7z) in eine hierzu vertikale Richtung (z) orientiert. Die in den drei orthogonalen Spulen induzierten Spannungen werden als Funktion des Abtastortes erfaßt und in getrennten Verarbeitungszügen verarbeitet, wobei aus den Änderungen der induzierten Spannungen die Position der Leitung abgeleitet wird.

## Beschreibung

Die Erfindung bezieht sich auf ein Verfahren zum Orten wenigstens einer Leitung durch Erfassen und Auswerten eines an der Leitung aufgebauten elektromagnetischen Feldes, wobei der Leitung zum Aufbau des elektromagnetischen Feldes ein elektrischer Wechselstrom eingeprägt wird; ein Meßkopf mit einer Spulenanordnung über den zu ortenden Leiter bewegt, das elektromagnetische Feld abgetastet und die im Meßkopf induzierte Spannung als Funktion des Abtastortes erfaßt wird; und aus der Lage und Lageänderung der Spulenanordnung und der Änderung der induzierten Spannung die Position der Leitung abgeleitet wird. Ferner bezieht sich die Erfindung auf eine Vorrichtung zur Durchführung dieses Verfahrens.

Mit bekannten Ortungsverfahren dieser Art beobachtet man die in der Spule induzierten Spannungen in demjenigen Bereich, unter welchem das gesuchte Objekt vermutet wird. Die durch das Extremum des Spannungswerts markierte Position wird als laterale Position der gesuchten Leitung angenommen. Diese Positionsannahme gilt nur dann mit ausreichender Genauigkeit, wenn das durch die Einspeisung auf der Leitung aufgebaute elektromagnetische Feld die Idealform für einen ungestörten Einzelleiter besitzt. Bei dieser Idealform verlaufen die elektromagnetischen Feldlinien konzentrisch um die den elektrischen Wechselstrom führende Leitung, z.B. eine Rohrleitung oder ein Kabel. Durch die Anwesenheit weiterer elektrischer Ströme ergeben sich jedoch elektrische Bedingungen, bei denen die elektromagnetischen Feldlinien nicht mehr kreisförmig und konzentrisch um einen Leiter verlaufen, sondern durch elektromagnetische Störfelder überlagert sind. Derartige Überlagerungen und Verzerrungen verfälschen die Positionsangaben, die mit bekannten Verfahren und Ortungsgeräten gewonnen werden können.

Der Erfindung liegt die Aufgabe zugrunde, die Meßgenauigkeit beim Orten von Leitungen zu erhöhen und die Einflüsse von elektromagnetischen Störfeldern auf die Meßergebnisse zu verringern.

Gelöst wird diese Aufgabe bei dem Verfahren der eingangs genannten Art erfindungsgemäß dadurch, daß die Abtastbahn quer zum generellen Leitungsverlauf gelegt wird; daß das elektromagnetische Feld mit drei Spulen abgetastet wird, deren Achsen orthogonal zueinander verlaufen, wobei die Achse einer ersten Spule in eine zur Abtastbahn parallele erste Richtung (x) und diejenige einer zweiten Spule in eine Vertikalrichtung (z) orientiert werden; daß die in den drei orthogonalen Spulen induzierten Spannungen erfaßt werden; und daß die induzierten Spannungen in getrennten Verarbeitungszügen verarbeitet werden.

Durch die Erfindung können die Amplituden- und Phasendatensätze aus allen drei Spulen gleichzeitig an allen vorgegebenen Meßpunkten gleichzeitig gewonnen werden. Dies bedeutet, daß die beispielsweise in x-Richtung (quer zum mutmaßlichen Verlaufe der Leitung) festgestellten Extremstellen mit den gleichzeitig gewonnenen Feldkomponenten in z-Richtung zur Kontrolle in Beziehung gesetzt werden können.

Vorzugsweise wird ein sinusförmiges Generatorsignal mit einer Frequenz im Bereich von 100 Hz bis 50 kHz in die zu ortende Leitung eingespeist und ein zum Generatorsignal phasenstarres Referenzsignal verwendet. Da bei der Auswertung der induzierten Spannungen über das Referenzsignal die Phasenlage berücksichtigt wird, können alle Einflüsse, die durch eine induktive oder kapazitive Störkopplung entstehen, eliminiert werden. Es entstehen in jedem Verarbeitungszug zwei Datensätze, von denen der erste als Hauptdatensatz die durch gleich- oder gegenphasige Ströme induzierten Spannungen in bezug auf den Generatorstrom enthält. Der ungleichphasige, den Störungen zugeordnete Datensatz enthält die induzierten Spannungen, soweit sie durch kapazitive oder induktive übergekoppelte Stromkomponenten verursacht sind. Dieser zweite Datensatz kann bei ausreichender Signalstärke zur Ermittlung der Leitungsparameter des zugehörigen Leiters herangezogen werden.

In bevorzugter Weiterbildung des erfindungsgemäßen Verfahrens werden die längs der Abtastbahn an vorgegebenen Meßpunkten aufgenommenen Amplituden- und Phasendatensätze aus allen drei Spulen zusammen mit den zugehörigen Lagekoordinaten des Meßkopfs auf der Abtastbahn in einem Datenspeicher gespeichert. Die Datensätze werden dann als Funktion des Abtastortes am Meßort mittels eines Computers ausgewertet, um die Lage der wenigstens einen zu ortenden Leitung zu bestimmen.

Zur Ermittlung und Kompensation einer Fehlausrichtung der Abtastbahn in bezug auf die zu ortende Leitung werden die Teildatensätze von der ersten Spule in x-Richtung und von einer dritten Spule in y-Richtung abgetastet und punktweise etwaige Winkeldifferenzen zwischen der x-Richtung des Meßkopfes und der x'-Richtung der zu ortenden Leitung bestimmt. Innerhalb vorgegebener Toleranzgrenzen der dabei festgestellten Winkeldifferenzen werden die Meßdatensätze für die weitere Auswertung von dem x-, y-, z-System des Meßkopfs in das x'-, y'-, z'-System der zu ortenden Leitung transformiert.

Zur Ermittlung des Abstandes der zu lokalisierenden Leitung in der senkrechten z-Richtung werden diejenigen Abtastorte herangezogen, an denen Gleichheit der Feldkomponenten in x- und z-Richtung festgestellt wird.

Zur Bestimmung der Lage der zu lokalisierenden Leitung werden insbesondere die folgenden charakteristischen Meßwerte herangezogen: Das Maximum der Feldkomponente in x-Richtung, das Minimum der Feldkomponente in z-Richtung, der Sprung der Phasendifferenz der Z-Komponente zur Referenzspannung und die Punkte gleicher induzierter Spannungen in x- und z-Richtungen.

Die o.g. charakteristischen Meßwerte für die Bestimmung der Leitungsparameter in nullter Näherung werden miteinander verglichen. Ergeben sich bei diesem Vergleich signifikante Unterschiede, so ist die Voraussetzung der Stromführung auf einem ungestörten Einzelleiter nicht erfüllt. Mit den Lageparametern der nullten Näherung wird der Verlauf des Magnetfelds längs der Abtastbahn berechnet und mit einem ggf. korrigierten Meßdatensatz verglichen. Die mittlere Abweichung zwischen den gemessenen und den berechneten Verläufen ist ein Qualitätsmaß für die berechneten Werte der Leitungsparameter. Überschreitet die mittlere Abweichung den durch die Meßgenauigkeit gegebenen Wert, so kann der gemessene Feldlinienverlauf nicht von einem ungestörten Einzelleiter stammen.

Größere Störungen sind gekennzeichnet durch große Abweichungen zwischen den gemessenen und den berechneten Verläufen. Bei größeren Störungen, beispielsweise durch Stromrückleitung über einen oberirdisch verlegten Leiter oder durch einen zur zu ortenden Leitung parallel laufenden Leiter, können die gemessenen Datensätze korrigiert werden, damit sich bei der Berechnung der Leitungsparameter genauere Werte ergeben. Zu Korrekturzwecken können in Weiterbildung der Erfindung beispielsweise folgende Maßnahmen getroffen werden:
a) Subtraktion eines längs der Abtastbahn konstanten Stromes;
b) Subtraktion des Rückstromeinflusses über einen Leiter mit bekannter Lage, der parallel zu der zu ortenden Leitung verläuft;
c) Entfaltung in die Einzeldatensätze und Berechnung der Leitungsparameter für die beiden Leiter bei gegenphasiger Stromeinspeisung, d.h. Hin- und Rückleitung des Stromes über zwei parallele Leiter;
d) Entfaltung in die Einzeldatensätze und Berechnung der Leitungsparameter für die beiden Leiter bei gleichphasig gespeisten Leitern, d.h. Einspeisung des sinusförmigen Stromes in die beiden parallelen Leiter.

Hat die zu ortende Leitung eine nicht vernachlässigbare Krümmung, so wird die Richtung der Leitung im Zuge der Auswertung bestimmt. Bei geringer Krümmung (großen Krümmungsradien) erfolgt die Kompensation durch die o.g. punktweise Bestimmung von Winkeldifferenzen zwischen x- und x'-Richtungen.

Generell bietet das erfindungsgemäße Verfahren zahlreiche Korrekturmöglichkeiten. Letztlich liefert das Qualitätsmaß für die Lageparameter Erkenntnisse über die Zuverlässigkeit der ermittelten Werte.

In Untersuchungen wurde festgestellt, daß sich eine Meßgenauigkeit von etwa 50mm für die Lageparameter der zu ortenden Leitung erzielen läßt, wenn die Länge der Abtastbahn mindestens der vierfachen Tiefe der erdverlegten Leitung entspricht und der Abstand der aufeinanderfolgenden Meßpunkte längs der Abtastbahn ≦ 20mm ist.

Die Vorrichtung zum Orten von Leitungen weist einen Meßkopf auf, der auf ein elektromagnetisches Feld anspricht. Diese Vorrichtung ist erfindungsgemäß dadurch gekennzeichnet, daß der Meßkopf drei Spulen mit orthogonal zueinander ausgerichteten Wickelachsen aufweist; und daß die Signalausgänge der Spulen mit drei separaten Signal-Verarbeitungszügen gekoppelt sind.

Vorzugsweise ist ein Generator zum Einspeisen eines sinusförmigen Generatorsignals in die zu ortende Leitung vorgesehen; der Generator hat einen Referenzsignalausgang, dessen zum sinusförmigen Generatorsignal phasenstarres Referenzsignal in die Signal-Verarbeitungszüge oder deren Auswerteeinrichtung einkoppelbar ist.

Zur Erleichterung der Auswertung und zur On-line-Bestimmung der Lageparameter sind die drei Verarbeitungszüge mit einem als Auswerteeinrichtung dienenden Mikrocomputer gekoppelt.

Der Meßkopf ist vorzugsweise an einem Schienenfahrzeug gehaltert, dessen Schienensystem quer zum generellen Verlauf der zu ortenden Leitung verläuft. An dem Schienenfahrzeug ist vorzugsweise ein Lagedetektor angeordnet, der mit einem zum Schienensystem parallelen Meßmarkensystem zusammenwirkt.

Der Meßkopf kann erfindungsgemäß um wenigstens eine Spulenachse schwenkbar gelagert sein.

Die Übertragung des Referenzsignals vom Generator zum Rechner kann auch drahtlos, insbesondere durch Sender und Funkempfänger erfolgen.

Im folgenden wird die Erfindung anhand von in der Zeichnung schematisch dargestellten Ausführungsbeispielen näher erläutert. In der Zeichnung zeigen:
- Fig. 1: eine schematische Darstellung mit den wesentlichen elektrischen Komponenten eines Ausführungsbeispiels der Erfindung in Zuordnung zu einem Abschnitt einer zu ortenden Rohrleitung;
- Fig. 2: eine perspektivische Ansicht eines Schienenfahrzeugs, das als Träger für den erfindungsgemäßen Meßkopf dient;
- Fig. 3: eine schematische Darstellung der in drei orthogonalen Spulen induzierten X-, Y- und Z-Spannungskomponenten in Zuordnung zu einem ungestörten Magnetfeld eines Einzelrohrs;
- Fig. 4a und 4b: die Verläufe der X- und Y-Komponenten bei gegenphasiger Speisung von zwei parallelen Leitern; und
- Fig. 5: phasenkorrigierte Daten der Induktionsspannungsmessungen an einem Rohrbogen mit einem Krümmungsradius von 0,9 m.

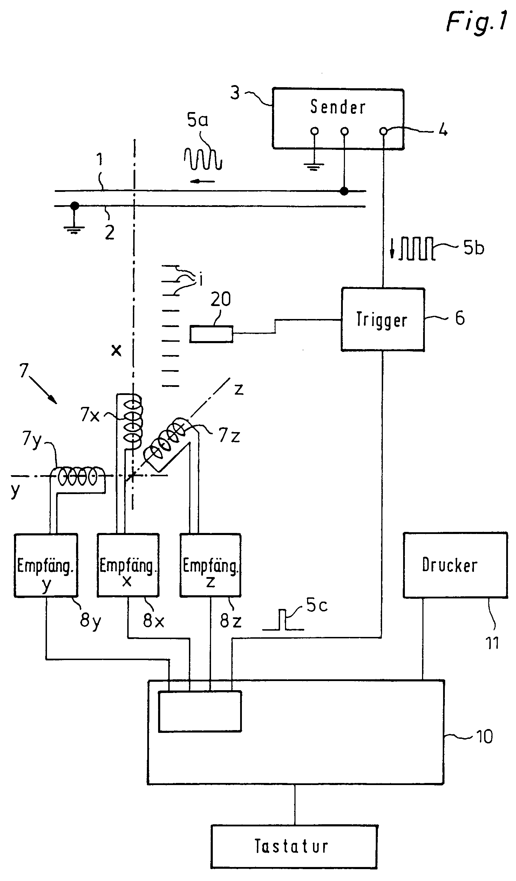

In Figur 1 sind die elektrischen Systemkomponenten der erfindungsgemäßen Vorrichtung in Zuordnung zu einer erdverlegten Rohrleitung 1 dargestellt. Die Rohrleitung 1 wird von einem Sender 3 mit einem sinusförmigen Wechselstrom 5a bei fester Frequenz und einstellbarer Amplitude gespeist. Die Frequenz des Senders 3 liegt im beschriebenen Ausführungsbeispiel bei 1 kHz; andere feste Frequenzbereiche von beispielsweise 100 Hz bis 50 kHz sind möglich. Der Rückstrom kann über einen Erdungsspieß im Erdreich oder über einen parallellaufenden Leiter 2, beispielsweise eine parallele Rohrleitung fließen.

Der Sender 3 dient auch als Rechteckgenerator und erzeugt an einem Referenzausgang 4 ein zum sinusförmigen Strom 5a phasenstarres Rechtecksignal 5b. Dieses Rechtecksignal 5b wird von einer Triggerschaltung 6 nur dann zur Triggerung der Meßwerterfassung und -auswertung durchgelassen, wenn ein Detektor 20 eine der in gleichmäßigen Abständen angeordneten Positionsmarken i erfaßt.

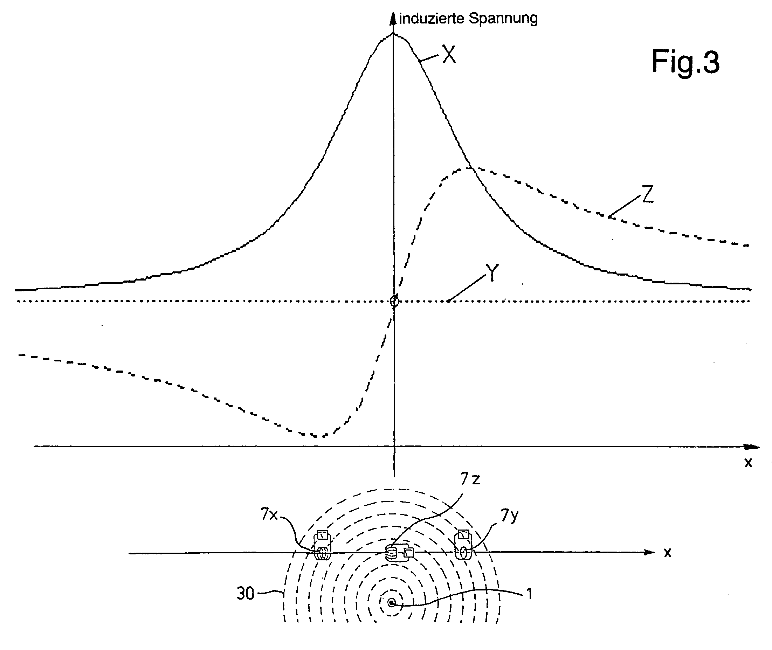

Ein Meßkopf 7 mit drei Spulen 7x, 7y und 7z nimmt das um die Rohrleitung 1 aufgebaute elektromagnetische Feld ggf. mit elektromagnetischen Störeinflüssen über drei orthogonal zueinander angeordnete Spulen 7x, 7y und 7z auf. In den drei Spulen wird jeweils eine Spannung induziert, die einerseits durch die magnetische Feldstärke des Magnetfeldes am Ort der Spule und andererseits durch die Orientierung der Spule zum Magnetfeld bestimmt ist. Diese Abhängigkeiten der in den drei Spulen 7x, 7y, 7z induzierten Spannungen werden weiter unten anhand der Fig. 3 erläutert.

Wie in Fig. 1 gezeigt ist, verläuft die Wickelachse der Spule 7x in einer Horizontalrichtung x quer zum generellen Verlauf der Rohrleitung 1. Parallel zu diesem Rohrleitungsverlauf ist die y-Achse der Spule 7y orientiert. Die z-Richtung mit der Wickelachse der Spule 7z verläuft vertikal zur Zeichenebene der Fig. 1 und zur Erdoberfläche.

Die in den einzelnen Spulen 7x, 7y und 7z induzierten Spannungen werden in getrennten Verarbeitungszügen, hier dargestellt durch Empfänger 8x, 8y und 8z, verarbeitet. Jeder Empfänger enthält bei dem beschriebenen Ausführungsbeispiel einen Verstärker mit einer stufenweise in 10dB-Schritten reproduzierbar einstellbaren Verstärkung. Die verstärkten Signale können einzeln gleichgerichtet und auf einem Analoginstrument zur Anzeige gebracht werden. Alle Meßsignale werden nach der Verstärkung, aber vor der Gleichrichtung ausgekoppelt, um die Phasendatensätze an den vorgegebenen Meßpunkten für die Meßdatenerfassung zugänglich zu machen. Die Messung wird jeweils durch ein aus dem Rechtecksignal 5b ausgeblendetes Triggerausgangssignal 5c ausgelöst, das mit dem Wechselstrom 5a phasenstarr ist.

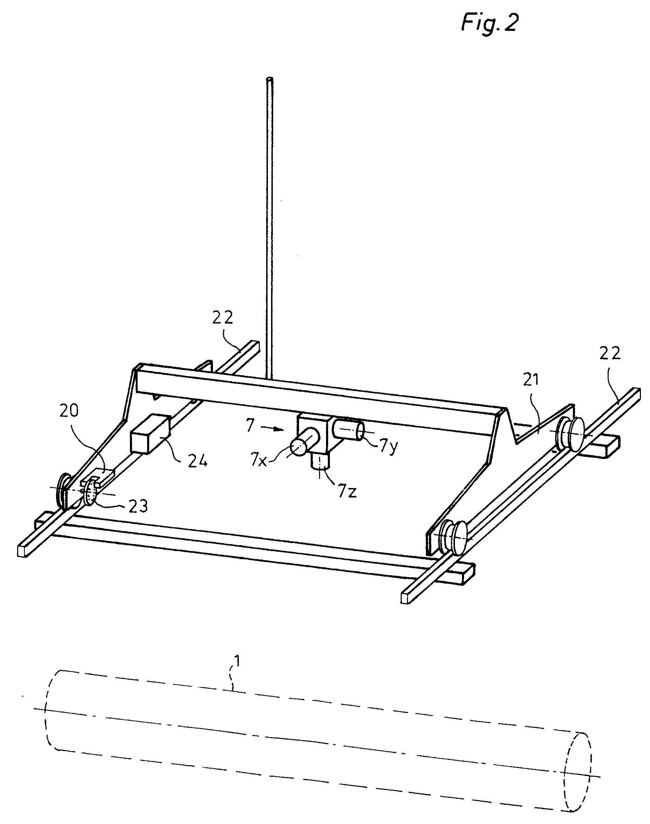

Wie oben gesagt, ist die in jeder Spule 7x, 7y, 7z induzierte Spannung abhängig von der Lage der zugehörigen Spule, d.h. deren Abstand von dem die magnetische Induktion B₀ hervorrufenden Leiter 1. Bei Änderung dieses Abstandes ändert sich die induzierte Spannung. Diese Spannungsänderung in den orthogonal zueinander orientierten Spulen 7x, 7y und 7z ist für die Ortung der erdverlegten Leitung wichtig. Dementsprechend müssen die Lage und Lageänderung des Meßkopfes 7 bei allen Messungen genau bekannt sein. Zur Bewegung des Meßkopfes dient bei dem beschriebenen Ausführungsbeispiel die in Fig. 2 schematisch dargestellte Anordnung. Der Meßkopf 7 und ein Lagedetektor 20 sind an einem Trägerfahrzeug 21 gehaltert, das auf einem Schienenpaar 22 in x-Richtung, d.h. parallel zur Wickelachse der Spule 7x beweglich gelagert ist. Die Schienen 22 haben bei dem beschriebenen Ausführungsbeispiel eine Länge von 10m.

Zur Durchführung eines Meßzyklus wird das Schienenfahrzeug 21 von einem Schienenende zum anderen bewegt, wobei die in allen drei Spulen 7x, 7y und 7z induzierten Spannungen in Zuordnung zu einem Meßraster (Marken i in Fig. 1) von 25mm Streifenabstand (in x-Richtung) aufgenommen werden. Entlang der nutzbaren Schienen-Meßlänge werden in einem Meßzyklus 373 Meßwerte (entsprechend einer nutzbaren Meßlänge von 9,3m) aufgenommen. Die Verknüpfung der Detektorimpulse entsprechend dem Streifenraster und der Referenzimpulse 5b geschieht in der Triggerschaltung 6. Jeweils nach der positiven Flanke eines Detektorimpulses wird die nächste positive Flanke des Referenzimpulses 5b durchgelassen, wobei sie die Messung auslöst. Als Lagedetektor ist in dem Ausführungsbeispiel ein magnetischer Näherungsschalter vorgesehen, der mit einer Laufrolle 23 zusammenwirkt. In alternativer Ausführungsform kann auch ein Lichtdetektor vorgesehen sein, der Lichtimpulse abtastet. Die Detektorimpulse werden in einem als Kasten 24 in Fig. 2 gezeigten Gerät verstärkt und durch in der Zeichnung nicht dargestellte Mittel zur Triggerschaltung 6 übertragen.

Die den einzelnen Spulen zugeordneten Verarbeitungszüge können im Hinblick auf die kurzen Bewegungswege des Meßkopfes 7 entlang des Schienenstrangs 22 durch galvanische Mittel an eine Auswerteeinrichtung (10 - Fig. 1) angekoppelt werden. Der Meßkopf 7 ist am Schienenfahrzeug 21 vorzugsweise schwenkbar angeordnet, um den Kopf 7 räumlich so zu positionieren, daß die z-Richtung vertikal zur Verlegeebene und die x-Richtung quer zum Verlauf der Rohrleitung 1 angeordnet sind.

Bei einer Einzelnmessung in Zuordnung zu einem vorgegebenen Punkt (Meßmarke i auf der Bewegungsbahn in x-Richtung) wird in einer z.B. als PC ausgebildete Auswerteeinrichtung 10 ein Spannungsverlauf von ca. 2 ms Dauer (2 Sinusschwingungen bei einer Frequenz von 1 kHz) in 256 Zeitschritten aufgenommen. Die drei getrennten Verarbeitungswege 8x, 8y und 87 der drei orthogonal zueinander orientierten Spulen 7x, 7y und 7z werden zusammen mit dem Triggersignal 5c in dem beschriebenen Ausführungsbeispiel einer vierkanaligen Transient-Rekorder-Karte im PC 10 zugeführt. Die an den Karteneingängen liegenden elektrischen Signale sind proportional zu den in den jeweiligen Spulen induzierten Spannungen und damit zu der magnetischen Flußdichte B. Die Spannung wird über einen Analog/Digital-Wandler mit 12 Bit-Auflösung in entsprechende Digitalworte umgewandelt. Die 12-Bit-Worte werden auf 15 Bit erweitert und dann in binärer Form und dichter Packung als String einer Länge von 512 Byte in einem Massenspeicher (Festplatte) des PC abgespeichert. Für die Datenübertragung und Datensicherung stehen bei dem beschriebenen Ausführungsbeispiel noch ein Disketten-Laufwerk und ein Streamer-Laufwerk zur Verfügung. Diese zum PC 10 gehörigen Komponenten sind in der Zeichnung in Fig. 1 nicht dargestellt. Zur Protokollierung dient ein Drucker 11, der mit dem Rechner 10 gekoppelt ist. Die Dateneingabe erfolgt über eine Tastatur 12.

Fig. 3 zeigt schematisch die Verläufe X, Y und Z derjenigen Spannungen, die während eines Meßzyklus, d.h. beim Überfahren der nutzbaren Länge des Schienenstrangs 22 induziert werden, wenn das magnetische Feld 30 um einen Einzelleiter 1 ungestört ist. Aus Anschaulichkeitsgründen ist unterhalb des Spannungsdiagramms in Fig. 3 das magnetische Feld 30 dargestellt, wobei die drei Spulen 7x, 7y und 7z in unterschiedlichen Meßkopfpositionen (auf der x-Achse) gezeigt sind.

Wie aus Fig. 3 zu entnehmen ist, hat die in der Spule 7x induzierte Spannung X ein Maximum bei minimalem Spulenabstand vom Leiter 1. Dieser Punkt liegt senkrecht über dem Leiter 1, also dort, wo die Durchdringung der Spule mit Feldlinien am intensivsten ist und Spulenachse und Magnetfeld annähernd parallel verlaufen. Die Richtung des magnetischen Felds bleibt gleich in bezug zur Spulenachse .

Die Y-Spannung, die in der Spule 7y induziert wird, bleibt nahezu 0, da diese Spule bei exakt senkrechter Orientierung zur Stromrichtung in ihrem Bewegungsablauf in x-Richtung nicht von magnetischen Feldlinien durchdrungen wird.

In einem bestimmten Abstand vom Leiter 1 sind die z-Achse der Spule 7z und das Magnetfeld 30 angenähert parallel, so daß die Durchdringung der Spule 7z mit Feldlinien maximal ist. Mit abnehmendem Abstand der Spule 7z zum Leiter 1 wird die Durchdringung der Spule 7z mit Feldlinien geringer, da Spulenachse z und Magnetfeld 30 sich einer senkrechten Relativlage nähern. Senkrecht über dem Leiter 1 hat die in der Spule 7z induzierte Spannung ein Minimum und steigt bei der Bewegung des Meßkopfs 7 in x-Richtung nach Durchlaufen des Minimums wieder auf einen Maximalwert an. Zusätzlich ändert sich nach dem Durchlaufen des Minimums das Vorzeichen der in der Spule 7z induzierten Spannung. Man erkennt, daß sich die Feldrichtung im Inneren der Spule 7z nach Durchlaufen des Spannungsminimums senkrecht über dem Leiter 1 umkehrt. Bei der Auswertung läßt sich diese Vorzeichenumkehr erfassen, indem neben dem Betrag der Amplitude des induzierten Signals auch dessen Phasenlage ermittelt wird. Die Phasenverschiebung bei der z-Komponente beträgt im Verlauf eines Meßzyklus 180°.

Die durch die Dreikopfmessung erzielbaren Informationen lassen sich bei der Ortung von Leitungen mit ungestörten Magnetfeldern (Fig. 3) zur raschen Erfassung zusätzlicher Lageparameter benutzen. Hierzu gehören beispielsweise die Erfassung der Tiefe der erdverlegten Leitung im Verlauf eines einzigen Meßzyklus.

In der Praxis sind Winkel zwischen der erdverlegten Leitung 1 und der sich aus der Orientierung der Spule 7y ergebenden y-Richtung häufig unvermeidbar. In diesem Falle erhält die Y-Kurve im Bereich senkrecht über dem Leiter 1 ein erkennbares Maximum; das Maximum der X-Kurve verschiebt sich entsprechend dem Vorzeichen der Winkelphase. Entsprechendes gilt auch für die beiden Maxima der Z-Kurve in Fig. 3. In der Praxis können weitere Störungen auftreten, die den Verlauf der in die Spulen induzierten Spannungen entscheidend beeinflussen können. Hierzu gehören
a) Einflüsse durch parallel laufende Leitungen (Leiter);
b) Leitungen (Leiter) mit Krümmern oder Kurven;
c) Ohm'sche, induktive oder kapazitive Kopplung mit dem Boden;
d) Einkopplung von Netzfrequenzoberwellen aus Hochspannungsstrassen.

Diese Störungen beeinflussen die drei aufgenommenen Komponenten in x-, y- und z-Richtung in der Regel unterschiedlich. Bei der Auswertung im PC 10 (Fig. 1) ergeben die drei Meßwertaufnahmen in zueinander orthogonalen Richtungen zumindest qualitative Erkenntnisse über die Lage der zu ortenden Leitung und die Art und Stärke der Störeinflüsse.

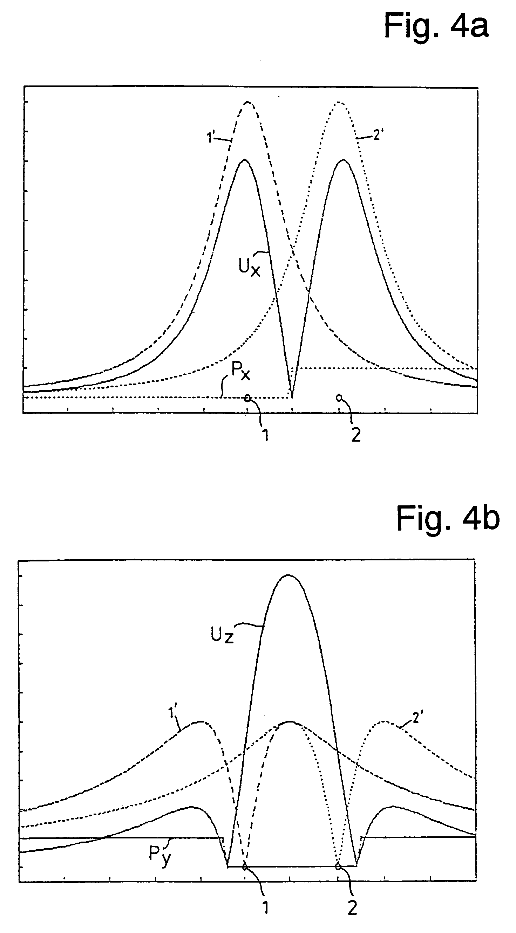

Im folgenden wird auf die Störeinflüsse a) und b) eingegangen. Die Figuren 4a und 4b veranschaulichen schematisch einen Meßzyklus beim Überfahren von zwei parallelen Leitern 1 und 2, die gegenphasig mit Wechselstrom gespeist werden. Fig. 4a zeigt die magnetischen Induktionen bzw. die induzierten Spannungen in der Spule 7x und Fig. 4b zeigt die entsprechenden Meßwertaufnahmen in der Spule 7z (die Komponente Y ändert sich in dem hier betrachteten Idealfall ebenso wenig wie im Falle eines Leiters mit ungestörtem Feldlinienverlauf gemäß Fig. 3). In den Figuren 4a und 4b sind sowohl die (theoretischen) Einzelinduktionen 1' und 2' der Leiter 1 und 2, als auch die daraus resultierenden induzierten Gesamtspannungen Ux bzw. Uz dargestellt. Mit Px bzw. Py sind die Phasenverläufe der zugehörigen Signale dargestellt. Wie zu erkennen ist, hat die X-Komponente einen Phasensprung in der Mitte zwischen den beiden Leitern 1 und 2. Die Z-Komponente hat in der Mitte zwischen den beiden Leitern 1 und 2 ein ausgeprägtes Maximum, das die Einzelmaxima deutlich übersteigt. Die Z-Komponente durchläuft links und rechts neben den beiden Leitern 1 und 2 ein Minimum und zeigt in Richtung der Ränder einen für Einzelleiter typischen Verlauf. Die Z-Komponente hat zwei scharfe Phasenübergänge, deren Lagen gegenüber den Leitern nach außen verschoben sind.

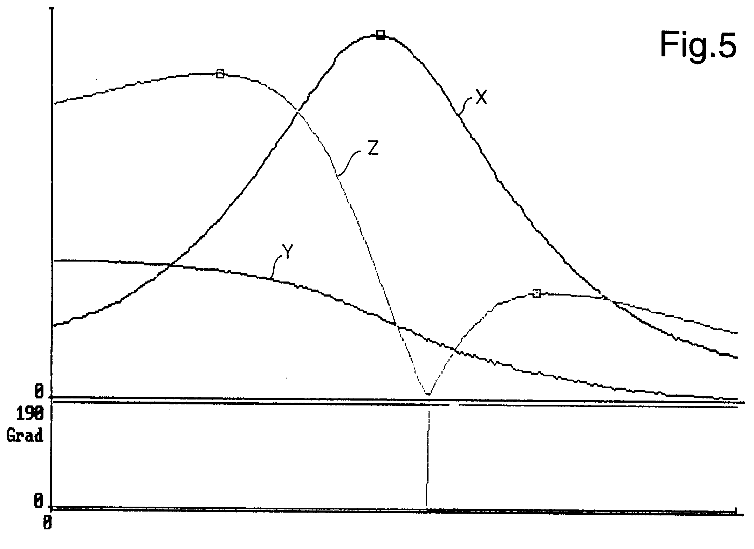

Der Einfluß von Kurven oder Krümmern auf den Verlauf der induzierten Spannungen in einem Aufnahmezyklus entlang der Schienenbahn 22 ist in Fig. 5 veranschaulicht. Dieser Meßkurve lag eine Testmessung an 90° Rohrbögen mit Krümmungsradien von 0,9 m zugrunde. Der Einfluß der Krümmung nimmt mit abnehmendem Krümmungsradius zu. Das Maximum der X-Komponente nimmt ab. Die Differenz zwischen den beiden Maxima der Z-Komponente wächst. Bei einer Krümmung zeigt die Tiefenauswertung aus der Gleichheit der X- und der Z-Komponenten einen erheblichen systematischen Fehler von beispielsweise 0,5 m bei der Lagebestimmung der erdverlegten Rohrleitung, wenn keine Korrektur vorgenommen wird. Der Fehler bei der Tiefenbestimmung ist wesentlich kleiner. Die in Fig. 5 dargestellten Verläufe basieren auf phasenkorrigierten Daten der Messungen an einem Rohrbogen.
Im Rahmen des Erfindungsgedanken sind zahlreiche Abwandlungen möglich. So können die Meßwertaufnahmen innerhalb eines Zyklus ggf. auf nur zwei Komponenten, beispielsweise die X- und Z-Komponenten (Fig. 4a und 4b) beschränkt werden; die Komponenten X, Y und Z können auch in aufeinanderfolgenden Bewegungszyklen beim Durchlaufen der Schienenbahn aufgenommen werden. Wesentlich ist, daß die Meßwertaufnahmen in den Richtungen x, y und z getrennt voneinander und in verschiedenen Verarbeitungswegen ohne gegenseitige Beeinflussungsmöglichkeit stattfinden. Im Zuge der Auswertung im Rechner 10 können dann aus einem Vergleich der getrennt erfaßten Amplituden- und Phasendatensätze genauere Informationen über die zu ortenden Leitungen und über Störquellen gewonnen werden. Die Auswertung erfolgt vorzugsweise On-Line, weil von der Auswertung eines Meßzyklus u.U. die Wahl einer weiteren Meßstelle abhängig ist, an der das Schienenpaar für den nächsten Meßzyklus verlegt wird. Prinzipiell ist jedoch auch eine Off-Line-Verarbeitung möglich. Zu diesem Zweck kann zusätzlich oder anstelle des PC 10 eine geeignete Sende-Empfangsanlage zur Datenübermittlung vorgesehen sein. Auch hinsichtlich der Ausbildung des Lagedetektors sowie der Signalübertragung vom Generator 3 zur Triggerschaltung 6 gibt es zahlreiche an sich bekannte Varianten. Insbesondere kann der Sender 3 einen Funksendeteil haben, der das Rechtecksignal 5b drahtlos zur Triggerschaltung und/oder zur Auswerteeinrichtung 10 überträgt. Als Lagedetektor sind lichtoptische, magnetische, mechanische oder andere Geräte verwendbar. Abweichend von der Darstellung nach Fig. 2 ist zum Verfahren des Meßkopfes auch ein Ein-Schienen-System einsetzbar.

## Patentansprüche

1. Verfahren zum Orten wenigstens einer Leitung durch Erfassen und Auswerten eines an der Leitung (1) aufgebauten elektromagnetischen Feldes (30), wobei
der Leitung zum Aufbau des elektromagnetischen Feldes ein elektrischer Wechselstrom (5a) eingeprägt wird;
ein Meßkopf (7) mit einer Spulenanordnung über den zu ortenden Leiter bewegt, das elektromagnetische Feld abgetastet und die im Meßkopf induzierte Spannung als Funktion des Abtastortes erfaßt wird; und
aus der Lage und Lageänderung der Spulenanordnung und der Änderung der induzierten Spannung die Position der Leitung abgeleitet wird,
**dadurch gekennzeichnet,**
daß die Abtastbahn quer zum generellen Leitungsverlauf gelegt wird;
daß das elektromagnetische Feld (30) mit drei Spulen (7x, 7y, 7z) abgetastet wird, deren Achsen orthogonal zueinander verlaufen, wobei die Achse einer ersten Spule (7x) in eine zur Abtastbahn parallele erste Richtung (x) und diejenige einer zweiten Spule (7z) in eine Vertikalrichtung (z) orientiert werden;
daß die in den drei orthogonalen Spulen induzierten Spannungen erfaßt werden; und
daß die induzierten Spannungen in getrennten Verarbeitungszügen verarbeitet werden.

2. Verfahren nach Anspruch 1, dadurch gekennzeichnet, daß ein sinusförmiges Generatorsignal (5a) mit einer Frequenz im Bereich von 100 Hz bis 50 kHz in die zu lokalisierende Leitung (1) eingespeist und ein zum Generatorsignal phasenstarres Referenzsignal (5b, 5c) verwendet wird.

3. Verfahren nach Anspruch 1 oder 2, dadurch gekennzeichnet, daß längs der Abtastbahn an vorgegebenen Meßpunkten (i) Amplituden- und Phasendatensätze aus allen drei Spulen (7x, 7y, 7z) aufgenommen und zusammen mit zugehörigen Lagekoordinaten des Meßkopfes (7) auf der Abtastbahn in einem Datenspeicher gespeichert werden.

4. Verfahren nach Anspruch 3, dadurch gekennzeichnet, daß die Datensätze als Funktion des Abtastortes am Meßort mittels eines Computers (10) ausgewertet werden, um die Lage der wenigstens einen zu ortenden Leitung (1) zu bestimmen.

5. Verfahren nach einem der Ansprüche 1 bis 4, dadurch gekennzeichnet, daß die Amplituden- und Phasendatensätze von zum Referenzsignal phasenstarren induzierten Spannungen von Datensätzen getrennt werden, die überlagerten Störungen zugeordnet sind und durch kapazitiv oder induktiv übergekoppelte Stromkomponenten hervorgerufen werden.

6. Verfahren nach Anspruch 5, dadurch gekennzeichnet, daß der den überlagerten Störungen zugeordnete Datensatz zur Ermittlung der Leitungsparameter der zu ortenden Leitung verwendet wird.

7. Verfahren nach einem der vorhergehenden Ansprüche, dadurch gekennzeichnet, daß Teildatensätze von der ersten Spule in x-Richtung und von einer dritten Spule in y-Richtung abgetastet und punktweise etwaige Winkeldifferenzen zwischen der x-Richtung des Meßkopfes und der x'-Richtung der zu ortenden Leitung bestimmt werden.

8. Verfahren nach Anspruch 7, dadurch gekennzeichnet, daß die Meßdatensätze für die weitere Auswertung von dem x-, y-, z-System des Meßkopfes in das x'-, y'-, z'-System der zu lokalisierenden Leitung transformiert werden, wenn die Winkeldifferenzen innerhalb vorgegebener Toleranzgrenzen liegen.

9. Verfahren nach einem der vorhergehenden Ansprüche, dadurch gekennzeichnet, daß die Abtastorte, an denen Gleichheit der Feldkomponenten in x- und z-Richtung festgestellt wird, zur Ermittlung des Abstandes der zu ortenden Leitung in senkrechter Richtung (z) herangezogen werden.

10. Verfahren nach einem der Ansprüche 1 bis 9, dadurch gekennzeichnet, daß das Maximum der Feldkomponente in x-Richtung und/oder das Minimum der Feldkomponente in z-Richtung und/oder der Sprung der Phasendifferenz zwischen Referenzsignal und der Feldkomponente in z-Richtung und/oder die Punkte gleicher Amplituden der induzierten Spannungen in x- und z-Richtungen zur Bestimmung der Lage der zu lokalisierenden Leitung verwendet werden.

11. Verfahren nach einem der Ansprüche 1 bis 10, dadurch gekennzeichnet, daß die Länge der Abtastbahn mindestens entsprechend der vierfachen Tiefe der Leitung (1) bemessen und der Abstand der Meßpunkte in x-Richtung ≦ 20 mm gewählt wird.

12. Vorrichtung zum Orten von Leitungen mit einem Meßkopf, der auf ein elektromagnetisches Feld anspricht,
**dadurch gekennzeichnet,**
daß der Meßkopf (7) drei Spulen (7x, 7y, 7z) mit orthogonal zueinander ausgerichteten Wickelachsen (x, y, z) aufweist; und
daß die Signalausgänge der Spulen mit drei separaten Signal-Verarbeitungszügen (8x, 8y, 8z) gekoppelt sind.

13. Vorrichtung nach Anspruch 12, dadurch gekennzeichnet, daß ein Generator (3) zum Einspeisen eines sinusförmigen Generatorsignals (5a) in die zu ortende Leitung (1) vorgesehen ist und daß der Generator einen Referenzsignalausgang (4) hat, dessen zum sinusförmigen Generatorsignal phasenstarres Referenzsignal (5b) mit den Signal-Verarbeitungszügen (8x, 8y, 8z und 10 koppelbar ist.

14. Vorrichtung nach Anspruch 12 oder 13, dadurch gekennzeichnet, daß die drei Verarbeitungszüge mit einem als Auswerteeinrichtung dienenden Mikrocomputer (10) gekoppelt sind.

15. Vorrichtung nach einem der Ansprüche 12 bis 14, dadurch gekennzeichnet, daß der Meßkopf (7) an einem Schienenfahrzeug (21) gehaltert ist.
